# EUROPÄISCHE PATENTSCHRIFT

(11) **EP 2 953 227 B1**
(45) Veröffentlichungstag und Bekanntmachung des Hinweises auf die Patenterteilung: **25.12.2019**
(21) Anmeldenummer: 15001273.0
(22) Anmeldetag: 29.04.2015
(51) Int. Cl.: H02J 1/08, H02J 7/00, B60R 16/03, H02J 1/00, H02J 7/14, H02J 7/34

(54) **BORDNETZ FÜR EIN KRAFTFAHRZEUG**
ELECTRICAL SYSTEM FOR A MOTOR VEHICLE
RÉSEAU DE BORD POUR UN VÉHICULE AUTOMOBILE

(30) Priorität: 07.06.2014 DE 102014008516
(43) Veröffentlichungstag der Anmeldung: 09.12.2015
(73) Patentinhaber: MAN Truck & Bus SE, 80995 München (DE)
(72) Erfinder: Kigin, Erdogan, 73760 Ostfildern (DE); Pfau, Stefan, 82377 Penzberg (DE)
(74) Vertreter: v. Bezold & Partner Patentanwälte - PartG mbB

(56) Entgegenhaltungen:
- DE-A1- 10 160 266
- DE-A1-102009 041 006
- DE-A1-102010 014 104
- DE-A1-102011 002 264
- DE-A1-102012 218 471
- DE-A1-102013 206 299

## Beschreibung

Die Erfindung betrifft ein Bordnetz für ein Kraftfahrzeug, insbesondere für ein Nutzfahrzeug, nach Anspruch 1.

Zur Versorgung von unterschiedlichen Verbrauchern über ein Netz weisen in jüngerer Zeit entwickelte Bordnetze für Kraftfahrzeuge außer einem ersten noch ein zweites Spannungsniveau auf. Dabei sind das erste und das zweite Spannungsniveau über einen Spannungswandler miteinander gekoppelt. An dem ersten Teilnetz mit der niedrigeren Nennspannung (z. B. 24 V) sind in der Regel Verbraucher mit niedriger Leistungsaufnahme angeschlossen. Ferner kann ein erster Energiespeicher vorgesehen sein. An dem zweiten Teilnetz mit der höheren Nennspannung (z. B. 48 V) können Hochleistungsverbraucher, ein Generator und ein zweiter Energiespeicher angeschlossen sein. Niederspannungsverbraucher können in kritischen Betriebssituationen wahlweise aus dem zweiten Teilnetz versorgt werden.

Der Generator kann ein sogenannter Mehrspannungsgenerator (Multi-Voltage-Generator, MVG) sein, der je nach an seiner Erregerspule anliegenden Spannung eine hohe oder eine niedrige Spannung erzeugt und die beiden Teilnetze mit elektrischer Leistung versorgt. Falls der Generator als elektrischer Starter-Generator, z. B. als Kurbelwellenstartergenerator ausgebildet ist, kann dieser für den Motorstart verwendet werden.

Meist wird zwischen diesen Teilnetzen zur Kopplung der beiden Teilnetze ein Spannungs-(DC/DC)-Wandler installiert, der in der Lage ist, Energie zwischen den Netzen zu transferieren. Eine Eigenschaft dieses DC/DC-Wandlers ist, dass dieser für die jeweiligen Seiten eine maximale und minimale Ausgangs- und Eingangsspannung besitzt. Wird an einem Bordnetz z. B. ein Speicher installiert, der z. B. eine hohe Selbstentladung beim Abstellen des Fahrzeugs aufweist oder im entladenen Zustand in das Fahrzeug montiert wird, muss dieser geladen bzw. vorkonditioniert werden. In einem typischen Anwendungsfall vom 24V/12V-Netz mit einer Bleisäurebatterie erfolgt dies durch die Lichtmaschine. Ist der Speicher keine Blei-Säure-Batterie bzw. ist im betroffenen Energiebordnetz keine Lichtmaschine vorhanden, muss die Vorladung durch den DC/DC-Wandler erfolgen.

Ein Problem hierbei ist, dass an den DC/DC-Wandler damit erhöhte Anforderungen für den Ausgangsspannungsbereich bzgl. der minimalen Ausgangsspannung gestellt werden. Folglich muss der DC/DC-Wandler auf einen größere Spannungswandlungsbereich auslegt werden, obwohl der maximale Spannungswandlungsbereich nur selten geschaltet zu werden braucht. Spannungswandler sind jedoch aufwändig in der Konstruktion und teuer in der Herstellung. So sind beispielsweise die benötigten Bauteile wie Glättungskondensatoren und Speicherspulen für hohe Temperaturen nicht geeignet. Außerdem müssen Maßnahmen für die Entstörung getroffen werden, da in DC/DC-Wandlern hohe Ströme mit sehr steilen Flanken geschaltet werden.

Im Stand der Technik wurde daher vorgeschlagen, parallel zu dem Spannungswandler einen Längsregler vorzusehen, um den DC/DC-Wandler zu entlasten und daher kleiner und kostengünstiger auslegen zu können. Längsregler sind robust und haben eine große Temperaturstabilität. Sie können über das Motorkühlwasser gekühlt werden. Ihre Störabstrahlung ist gering.

Ein derartiger Aufbau ist aus DE 102 62 000 A1 bekannt. Dieser Stand der Technik beschreibt ein Bordnetz für ein Kraftfahrzeug mit mindestens einem ersten und einem zweiten Spannungsniveau und einem Generator, wobei das erste und das zweite Spannungsniveau über eine erste Koppelvorrichtung miteinander gekoppelt sind, wobei die erste Koppelvorrichtung einen Längsregler umfasst. Das Bordnetz umfasst weiterhin eine erste Regelvorrichtung, die den Längsregler unter Berücksichtigung der zukünftigen Belastung des zweiten Spannungsniveaus ansteuert.

Ein derartiger Aufbau ist ferner aus der DE 10 2005 060 129 A1 bekannt, wobei ferner elektrischen Verbrauchern jeweils eine eigene Priorität zugewiesen wird und die elektrischen Verbraucher in Abhängigkeit von ihrer elektrischen Priorität versorgt werden, so dass die Summer der Verbraucherleistungen einen vorgegebenen Leistungswert des Generators nicht übersteigt.

Ein geeigneter Längsregler ist jedoch ebenfalls vergleichsweise teurer in der Herstellung und erfordert zusätzlichen Regelungsaufwand.

DE 101 60 266 A1 offenbart ein Bordnetz mit zwei Teilnetzen, die über einen DC/DC-Wandler gekoppelt sind, wobei eine Serienschaltung aus mindestens einer Diode und einer Sicherung parallel zu dem DC/DC-Wandler geschaltet ist, um im Ruhezustand bei getrennter Batterie des Teilnetzes mit höherer Nennspannung, eine Versorgung der Verbraucher mit niedrigem Spannungsniveau im Teilnetz mit höherer Nennspannung aus dem Teilnetz mit niedriger Nennspannung zu ermöglichen.

Ferner ist aus der DE 10 2012 218 471 A1 eine Schaltungsanordnung für ein Bordnetz bekannt, bei der zwei Teilbordnetze über einen DC/DC-Wandler gekoppelt sind. Hierbei ist mindestens ein Widerstand parallel zum DC/DC-Wandler schaltbar, welcher im zugeschalteten Zustand einen Stromfluss aus dem 1. Teilbordnetz in das 2. Teilbordnetz freigibt.

Aus der DE 10 2011 002 264 A1 ist eine Leistungszuführungseinheit bekannt, bei der eine Schalteinrichtung, zwischen dem Generator und einer Blei-Sekundärbatterie und einer Lithium-Sekundärbatterie elektrisch verbunden ist. Die Schalteinrichtung kann zwischen Leiten und Sperren schalteten. Die Schalteinrichtung ist durch eine Mehrzahl von MOS-FET konfiguriert, die in Serie verbunden sind, sodass entsprechende parasitäre Dioden in entgegengesetzte Richtungen stehen.

Es ist somit eine Aufgabe der Erfindung, ein Bordnetz bzw. eine verbesserte Kopplungseinrichtung der beiden Teilnetze eines Bordnetzes bereitzustellen, mit der Nachteile herkömmlicher Bordnetze bzw. Kopplungseinrichtungen vermieden werden können. Der Erfindung liegt insbesondere die Aufgabe einer einfacheren und kostensparenderen Gestaltung einer solchen Kopplungseinrichtung zugrunde, die eine Vorladung eines entladenen Energiespeichers im Teilnetz mit höherer Nominalspannung über das andere Teilnetz mittels der Kopplungseinrichtung ermöglicht.

Diese Aufgaben werden durch ein Bordnetz mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Bordnetz für ein Kraftfahrzeug, insbesondere für ein Nutzfahrzeug, weist in Übereinstimmung mit dem Stand der Technik ein erstes Teilnetz, in dem eine erste Nennspannung anliegt, und ein zweites Teilnetz, in dem eine zweite Nennspannung (U2) anliegt, auf. Das erste Teilnetz umfasst einen ersten Energiespeicher und einen ersten, durch mehrere Verbraucher gebildeten Lastwiderstand. Das zweite Teilnetz umfasst einen Generator, nämlich erfindungsgemäß einen Startergenerator, und einen zweiten Energiespeicher. Beide Teilnetze sind massegekoppelt. Erfindungsgemäß ist in diesem Fall die erste Nennspannung (U1) kleiner als die zweite Nennspannung (U2).

Ferner besteht im Rahmen der Erfindung die Möglichkeit, dass der der Generator eine elektrischen Maschine ist, die zum Generatorbetrieb bzw. Rekuperationsbetrieb und zum Starten eines Verbrennungsmotors des Kraftfahrzeugs ausgebildet ist. Insbesondere kann der Generator ein Kurbelwellenstartergenerator sein. Der zweite Energiespeicher ist ausgebildet, von dem Generator erzeugte elektrische Ladung zu speichern und kann beispielsweise ein Superkondensatorspeicher oder Li-Ionen-Akkumulator sein.

Gemäß allgemeinen Gesichtspunkten der Erfindung erfolgt die Kopplung der beiden Teilnetze miteinander über eine Parallelschaltung aus einem Spannungswandler und einer Hilfsladeeinrichtung, wobei die Hilfsladeeinrichtung ein nicht-regelbares Strombegrenzungselement und mindestens einen hierzu in Reihe geschalteten Schalter umfasst. Der Spannungswandler, nachfolgend auch als DC/DC-Wandler bezeichnet, ist vorzugsweise ausgeführt, für die jeweiligen Seiten in Bezug auf die Teilnetze eine minimale und maximale Ausgangs- und Eingangsspannung aufzuweisen.

Es wird somit ein schaltbarer Bypass zum Spannungswandler bereitgestellt, wobei die Hilfsladeeinrichtung bzw. Hilfsladeschaltung vorteilhafterweise besonders einfach und kostensparend realisiert werden kann. Über den Schalter kann der Bypass bei Bedarf geöffnet und geschlossen werden.

Das Strombegrenzungselement kann ein ohmscher Widerstand sein, was eine besonders einfache und kostensparendere Gestaltung ermöglicht.

Das Strombegrenzungselement bzw. der Widerstand ist vorzugsweise so ausgelegt, dass bei Verbindung der beiden Teilnetze über die Hilfsladeeinrichtung der Energiespeicher und die Verbraucher im Teilnetz mit niedrigerer Nominalspannung innerhalb ihrer vorbestimmten Betriebsgrenzen betrieben werden. Der Widerstand ist somit beispielsweise mindestens so groß zu wählen, dass die beim Verbinden der beiden Teilnetze auftretenden Stromspitzen nicht die vorgegebenen Stromgrenzen für die in den Teilnetzen angeordneten Bauteile übersteigen. Das Auslegen des Strombegrenzungselements kann mittels einer Simulation oder auch versuchsweise erfolgen. Ein zusätzlicher Regelungsaufwand, wie dies bei Verwendung von einem Längsregler der Fall wäre, entfällt.

Erfindungsgemäß umfasst die Hilfsladeeinrichtung einen zweiten Schalter, der in Serie zum ersten Schalter und dem Strombegrenzungselement angeordnet ist. Dies bietet den Vorteil einer zusätzlichen Absicherung für den Fall einer Fehlfunktion des ersten Schalters, um zu vermeiden, dass bei Ausfall des ersten Schalters die beiden Teilnetze entweder nicht mehr mittels des Bypasses gekoppelt werden können oder ungewollt durch den Bypass miteinander gekoppelt werden oder sind.

Die Erfindung ist hinsichtlich des konstruktiven Aufbaus des elektrischen Schalters oder der elektrischen Schalter des Hilfsladeeinrichtung nicht auf einen bestimmten Aufbau oder Typ des Schalters oder der Schalter beschränkt.

Eine nicht beanspruchte Möglichkeit der Realisierung sieht vor, dass der erste Schalter und der zweite Schalter als Halbleiterschalter bzw. IGBTs mit jeweils parallel geschalteter Diode ausgeführt sind, wobei die Diode des ersten Schalters antiseriell zu der Diode des zweiten Schalters angeordnet ist. Unter einer antiseriellen Anordnung der Dioden wird verstanden, dass die Durchlassrichtungen der Dioden zueinander entgegengesetzt sind. In diesem Fall besteht die Hilfsladeeinrichtung somit aus dem Strombegrenzungselement und zwei in Serie geschalteten Parallelschaltungen aus jeweils einem Halbleiterschalter und einer Diode, wobei die Dioden zueinander antiseriell sind. Diese nicht beanspruchte Variante kombiniert die Vorteile der guten Schalteigenschaften von Halbleiterschaltern, der Absicherung für den Fehlerfall eines Schalters und stellt durch die passive Schalteigenschaften der Diode sicher, dass ein Entladen des Energiespeichers im Hochvoltnetz auf eine Spannung unterhalb der Niedervoltspannung des anderen Teilnetzes bei geschlossen Halbleiterschaltern nicht stattfindet. Ferner kann ein Notbetrieb, bei dem das erste Teilnetz aus dem zweiten Teilnetz versorgt wird, ermöglicht werden.

Bei einer vorteilhaften Variante ist der erste Schalter ein N-Kanal-MOS-FET und der zweite Schalter ein antiseriell zum ersten N-Kanal-MOS-FET geschalteter N-Kanal-MOS-FET. Ein N-Kanal-MOS-FET-Transistor weist bereits eine antiparallel geschaltete Freilauf-Diode auf. Die antiserielle Schaltung der beiden N-Kanal-MOS-FETs stellt somit sicher, dass sich die beiden Teilnetze im Falle von geschlossenen Schaltern und bei Vorliegen von entsprechenden Potentialunterschieden nicht ungewünscht verbinden und ein Entladen des Energiespeichers im Hochvoltnetz auf eine Spannung unterhalb der Niedervoltspannung des anderen Teilnetzes bei geschlossen Halbleiterschaltern stattfindet.

Erfindungsgemäß ist der zweite Schalter der Hilfsladeeinrichtung als eine Diode ausgebildet, der in Serie zum ersten Schalter und dem Strombegrenzungselement angeordnet ist, wobei die Diode in Richtung des ersten Teilnetzes sperrt. Der Vorteil, den zweiten Schalter als Diode auszuführen, liegt wiederum darin, dass durch die passiven Schalteigenschaften der Diode ein Entladen des Speichers auf eine Spannung unterhalb der NV-Spannung bei geschlossenem ersten Schalter nicht stattfindet. Allerdings ist ein Notbetrieb, bei dem das erste Teilnetz aus dem zweiten Teilnetz versorgt wird, nicht mehr möglich.

Zum Schutz der Bauteile ist es vorteilhaft, dass das Strombegrenzungselement in Bezug auf das erste Teilnetz vor dem ersten Schalter und dem zweiten Schalter angeordnet ist. Grundsätzlich kann die Reihenfolge in der Reihenschaltung jedoch beliebig gewählt werden.

Schließlich besteht im Rahmen der Erfindung die Möglichkeit, dass im ersten Teilnetz eine externe Ladeschnittstelle zum Anschluss eines externen Ladegeräts oder eines externen Fremdstartstützpunkts vorgesehen ist. Ein besonderer Vorzug dieser Ausführungsvariante liegt darin, dass ein entladener Energiespeicher im zweiten Teilnetz über die externe Ladeschnittstelle des ersten Teilnetzes geladen werden kann, so dass die Startfähigkeit des Antriebsmotors des Kraftfahrzeuges aus dem fahrzeugeigenen Mehrspannungsbordnetz wiederherstellbar ist, falls beispielsweise neben dem Startergenerator im zweiten Teilnetz kein zusätzlicher konventioneller Starter vorgesehen ist. Durch das Vorsehen der externen Ladeschnittstelle im Teilnetz mit der niederen Nominalspannung können beispielsweise eine herkömmliche Niedervolt-Batterie oder ein herkömmliches Niedervolt-Bordnetz eines Fremdfahrzeugs, die wesentlich weiter verbreitet sind, als externes Ladegerät bzw. als Fremdstartstützpunkt verwendet werden.

Das Bordnetz umfasst erfindungsgemäß ferner eine Messeinrichtung zur Erfassung der Spannung im ersten Teilnetz und zur Erfassung der Spannung im zweiten Teilnetz. In Abhängigkeit der erfassten Spannungswerte kann dann die Kopplung wahlweise über den Spannungswandler oder die Hilfsladeeinrichtung erfolgen. Erfindungsgemäß wird der Bypass geöffnet, durch Schließen des oder der Schalter der Hilfsladeeinrichtung, falls zwei vorhanden sind, wenn die Spannung im Teilnetz mit höherer Nominalspannung unter einen vorgegebenen Schwellwert fällt oder wenn eine Fehlfunktion des Spannungswandlers festgestellt wird.

Hierbei ist festzustellen, dass im Rahmen der Erfindung die Möglichkeit besteht, den Spannungswandler und/oder die Schalter der Hilfsladeeinrichtung zentral von einer Steuereinheit zu steuern, die die aktuellen Spannungswerte der beiden Teilnetze übermittelt bekommt. Alternativ kann beispielsweise die Hilfsladeeinrichtung auch so ausgeführt sein, dass sie autonom den/die Schalter der Hilfsladeeinrichtung in Abhängigkeit von Spannungswerten der beiden Teilnetze öffnet oder schließt. Gemäß dieser Variante kann die Hilfsladeeinrichtung vorteilhafterweise ferner Mittel zur Spannungsmessung umfassen, um die Spannungen in den beiden Teilnetzen zu ermitteln.

Die Erfindung betrifft ferner ein Fahrzeug, insbesondere ein Nutzfahrzeug, mit einem Bordnetz nach einem der vorstehenden Ansprüche.

Weitere Einzelheiten und Vorteile der Erfindung werden im Folgenden unter Bezug auf die beigefügten Zeichnungen beschrieben. Es zeigen:
- Figur 1: ein Bordnetz gemäß einem nicht beanspruchten Beispiel;
- Figur 2A: ein Bordnetz gemäß einem weiteren nicht beanspruchten Beispiel;
- Figur 2B: eine Tabelle zur Illustration der Funktionsweise der Hilfsladeeinrichtung des Ausführungsbeispiels aus Figur 2A;
- Figur 3A: ein Bordnetz gemäß einem weiteren Ausführungsbeispiel;
- Figur 3B: eine Tabelle zur Illustration der Funktionsweise der Hilfsladeeinrichtung des Ausführungsbeispiels aus Figur 3A;
- Figur 4: ein Bordnetz gemäß einem weiteren Ausführungsbeispiel; und
- Figur 5: ein Sequenzdiagramm zur Illustration eines Betriebs des Bordnetzes aus Figur 4 mit externer Startunterstützung.

Gleiche oder funktional äquivalente Elemente sind in allen Figuren mit denselben Bezugszeichen bezeichnet.

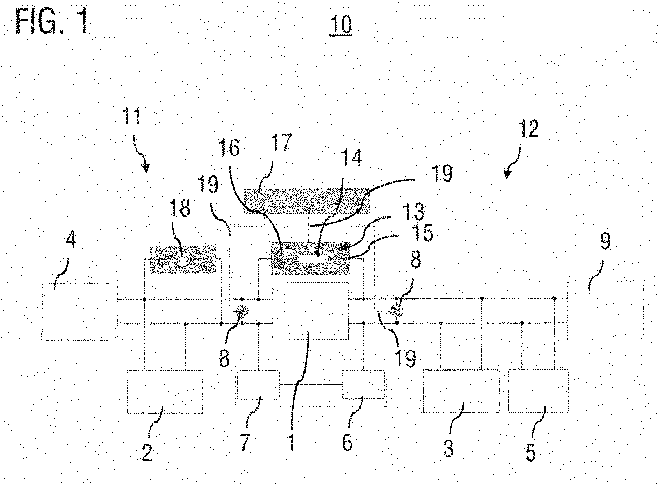

Figur 1 zeigt schematisch ein nicht beanspruchtes Ausführungsbeispiel für ein Bordnetz 10 eines Fahrzeugs, insbesondere eines Nutzfahrzeugs. Das Bordnetz 10 weist zwei Teilnetze 11, 12 auf:

Ein erstes Teilnetz 11, in dem eine erste Netzspannung U1, z. B. 24 V, anliegt, und das einen ersten Energiespeicher 2 und einen Lastwiderstand 4 umfasst. Der Lastwiderstand 4 ist durch wenigstens einen, vorzugsweise durch mehrere Verbraucher gebildet. Die Verbraucher in dem ersten Teilnetz 11 benötigen eine konstante Versorgungsspannung und haben insbesondere einen relativ konstanten Leistungsbedarf. Ferner weist das erste Teilnetz 2 einen Sensor 8 zur Überwachung der Spannung im ersten Teilnetz 11 auf. Nachfolgend werden auch die Ausdrücke "Bordnetz" oder einfach "Netz" anstatt Teilnetz verwendet.

Ferner ein zweites Teilnetz 12, in dem eine zweite Netzspannung U2, z. B. 48 V, anliegt und in dem ein Startergenerator 5 vorgesehen ist. Der Startergenerator 5 ist zum Starten eines Verbrennungsmotors (nicht gezeigt) des Kraftfahrzeugs und zum Generatorbetrieb bzw. Rekuperationsbetrieb ausgebildet. In dem Bordnetz 10 erzeugt der Startergenerator 5 ferner die Netzspannung und liefert den Strom für die an das Bordnetz 10 angeschlossenen Verbraucher 9.

Im zweiten Teilnetz 12 ist ferner ein zweiter Energiespeicher 3 vorgesehen. Der zweite Energiespeicher 3 ist ausgebildet, von dem Startergenerator 5 in dem Generatorbetrieb bzw. Rekuperationsbetrieb erzeugte elektrische Ladung zu speichern. Der Energiespeicher 3 ist als Superkondensatorspeicher ausgebildet. Im zweiten Teilnetz 12 können optional ferner ebenfalls ein oder mehrere Verbraucher 9 angeschlossen sein.

Die Bezugszeichen 8 und 7 bezeichnen jeweils die Massepunkte der beiden Teilnetze. Die beiden Teilnetze sind somit massegekoppelt.

Das Bordnetz 10 umfasst ferner einen Spannungswandler (DC/DC-Wandler) 1, der das erste Teilnetz 11 mit dem zweiten Teilnetz 12 bidirektional in an sich bekannter Weise koppelt.

Die Steuerung des Bordnetzes 10 wird durch eine Steuerung 17 vorgenommen, die über entsprechende Signal- und Messleitungen 19 (diese sind in den Figuren zur Unterscheidung von stromführenden Leitungen gestrichelt dargestellt) mit den entsprechenden Komponenten des Bordnetzes 10 verbunden ist, insbesondere dem Spannungswandler 1, der Hilfsladeschaltung 13 und den Spannungsmessstellen 8,9, um die Versorgung des ersten Teilnetzes 11 in der erforderlichen Konstanz sicherzustellen. Ferner ist die Steuerung 17 über Steuerleitungen (nicht gezeigt) mit dem Startergenerator 5 verbunden, um dessen Leistungsabgabe zu steuern. Die Steuerung 17 kann ferner über Steuerleitungen mit den einzelnen Verbrauchern verbunden sein (nicht gezeigt), um diese bei Bedarf ab- bzw. zuzuschalten.

Die Steuereinheit 17 ist beispielsweise ausgebildet, an den Spannungswandler 1 in Abhängigkeit der empfangenen Messsignale von den Spannungsmessstellen 8, 9 und/oder in Abhängigkeit der Ladungszustände der Energiespeicher 2, 3 Steuersignale an den Spannungswandler 1 auszugeben. In Abhängigkeit der von der Steuereinheit empfangenen Steuersignale ist der Spannungswandler 1 eingerichtet, Energie vom ersten Teilnetz 11 in das zweite Teilnetz 12 zu übertragen und umgekehrt. Über den Spannungswandler kann auf diese Weise insbesondere Energie vom ersten Energiespeicher 2 zu dem zweiten Energiespeicher 3 übertragen werden und umgekehrt.

Die Speicherkapazität 3 kann zusätzlich durch den bidirektional arbeitenden DC/DC-Wandler 1 aus dem Energiespeicher 2 aufgeladen werden. Sollte im Startfall die Energie der Speicherkapazität 3 nicht ausreichen, besteht die Möglichkeit, die Energie zum Starten mit dem Starter-Generator über die Hilfsladeschaltung 13 aus dem Energiespeicher 2 zu beziehen, sobald die Spannung an der Speicherkapazität 3, gemessen durch die Messstelle 8, unter die Spannung des Energiespeichers 2 sinkt.

Parallel zu dem Spannungswandler 1 ist die erwähnte Hilfsladeschaltung 13 geschaltet, so dass das erste und zweite Teilnetz (11, 12) über eine Parallelschaltung aus dem Spannungswandler 1 und der Hilfsladeschaltung 13 miteinander gekoppelt sind. Die Hilfsladeeinrichtung 13 wird aus einem Widerstand 14 und mindestens einem hierzu in Reihe geschalteten Schalter 15 gebildet. Die Hilfsladeschaltung, d. h. der oder die Schalter 15, 16 der Hilfsladeschaltung, wird ebenfalls von der Steuereinheit 17 gesteuert, so dass die beiden Teilnetze 11, 12 wahlweise über den Spannungswandler 1 oder die Hilfsladeschaltung 13 gekoppelt werden können. Der Widerstand 14 dient dazu, den Ladestrom zu begrenzen, falls die Kopplung der beiden Teilnetze 11, 12 über die Hilfsladeschaltung 13 erfolgt.

Optional (angedeutet durch den gestrichelten Rahmen) kann ein zweiter Schalter 16 vorgesehen sein, um im Einzelfehlerfall eines Schalters ein ungewolltes Verbinden der Netze 11, 12 zu verhindern.

Im ersten Teilnetz 11 ist ferner eine externe Ladeschnittstelle 18 vorgesehen, über die es möglich ist, externe Versorgungen an das Bordnetz 10 anzuschließen.

Für den Anwendungsfall, dass der Startergenerator 5 für den Verbrennungsmotor aus dem zweiten Bordnetz 12 versorgt wird und der Energiespeicher 3 dieses Netzes 12 entladen ist, kann mit der Vorladeschaltung 13 dann auch wieder eine Startfähigkeit herstellgestellt werden. Erfolgt der Motorstart somit beispielsweise aus dem 48V-Netz-Teilnetz 12, benötigt man keine neuen Starthilfevorrichtungen, sondern kann bestehende 12V/24V-Vorrichtungen und Maßnahmen einsetzen.

Um den Ladevorgang dezentral zu steuern, ist es notwendig, dass die Spannung der Bordnetze 11, 12 bekannt ist. Dafür sind geeignete Messstellen in den Bordnetzen 11, 12 notwendig. Dies kann z. B. durch interne Steuergeräte-Messungen erfolgen, die dann z. B. über das Fahrzeugbussystem ihre Messwerte verteilen, oder durch diskrete Messeinrichtungen 8, 9, wie in Figur 1 dargestellt, welche an die Fahrzeugsteuerung angeschlossen sind. Nachfolgend werden weitere Ausführungsbeispiele beschrieben. Hierbei entsprechen Komponenten mit gleichen Bezugszeichen den Komponenten der Figur 1.

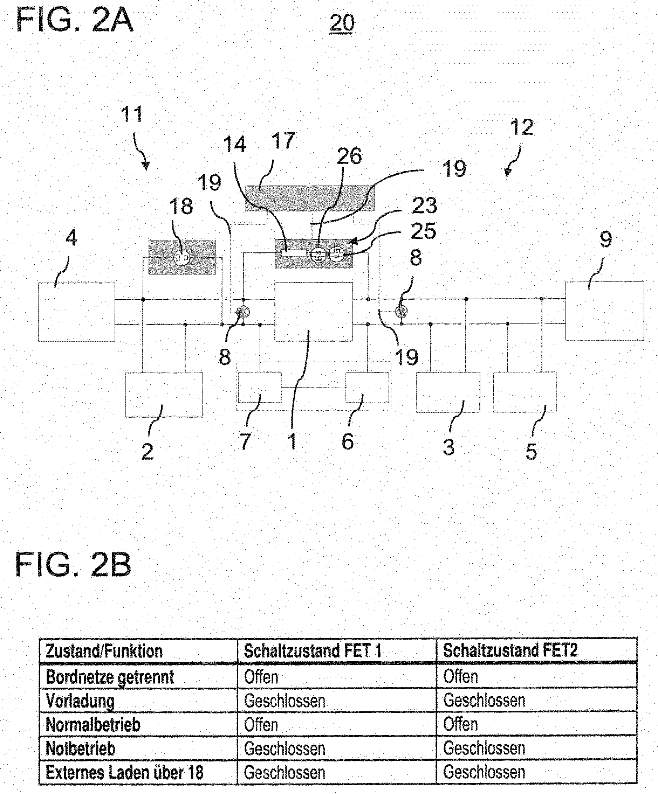

Die Besonderheit des in Figur 2A gezeigten nicht beanspruchten Ausführungsbeispiels 20 liegt darin, dass der Schalter der Hilfsladeschaltung 23 aus einem ersten N-Kanal-MOS-FET-Schalter 25 und einem hierzu antiseriell verschalteten zweiten N-Kanal-MOS-FET-Schalter 26 gebildet wird. Ein solcher N-Kanal-MOS-FET hat eine integrierte antiparallel geschaltete Freilauf-Diode, so dass bei einer antiseriellen Schaltung der beiden N-Kanal-MOS-FETs 25, 26 die entsprechenden Dioden entgegengesetzte Durchlassrichtungen haben. Die Anordnung aus zwei antiseriellen N-Kanal-MOS-FETs verhindert wiederum, dass im Einzelfehlerfall eines Schalters ein ungewolltes Verbinden der Netze 11, 12 erfolgen kann.

Selbstverständlich ist eine alternative Ausgestaltung mit nur einem Schalter möglich, wobei dann der Schalter 25 zu wählen ist, dessen Diode in Figur 2A so angeordnet ist, dass ihre Durchlassrichtung vom ersten Teilnetz 11 in das zweite Teilnetz 12 ist.

Figur 2B illustrierte die Schaltzustände der N-Kanal-MOS-FET-Schalter 25, 26 für verschiedene Betriebszustände. Zum Trennen der beiden Bordnetze 11, 12 öffnet die Steuereinheit 17 die Schalter 25, 26. Bei geladenem Speicher 2 und entladenem Speicher 3 kann Letzterer durch den Speicher 2 geladen werden. Hierzu werden die beiden Teilnetze 11, 12 über die Hilfsladeschaltung 23 gekoppelt. Die Steuereinheit 17 schließt hierzu die Schalter 25, 26. Die Hilfsladeschaltung kann daher auch als Vorladeschaltung bezeichnet werden.

Im Normalbetrieb, d. h. die Spannung im Teilnetz 12 ist größer als im Teilnetz 11, sind beide Schalter 25, 26 wiederum offen; die Kopplung erfolgt über den Gleichspannungswandler 1. Wenn eine Fehlfunktion des Spannungswandlers festgestellt wird, können die Verbraucher 4 des ersten Teilnetzes 11 auch hilfsweise über die Hilfsladeschaltung 23 versorgt werden. Für diesen Notbetrieb werden die Schalter 25, 26 ebenfalls geschlossen.

Ferner kann, wie vorstehend beschrieben, ein externes Laden eines entladenen Energiespeichers 3 des zweiten Teilnetzes 12 durch Anschluss einer externen Energiequelle über die externe Ladeschnittstelle 18 erfolgen. Erfasst die Steuereinrichtung 17 eine externe Energiequelle an der externen Ladeschnittstelle 18, werden von ihr beide Schalter 25, 26 ebenfalls geschlossen.

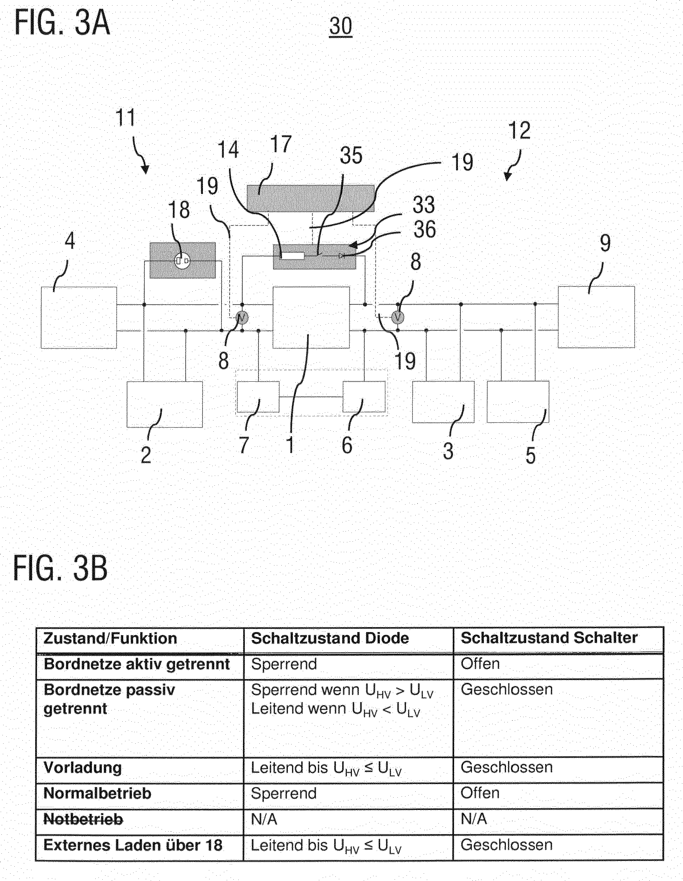

Die Besonderheit des in Figur 3A gezeigten erfindungsgemäßen Ausführungsbeispiels 30 liegt darin, dass der zweite Schalter der Hilfsladeschaltung 33 eine Diode 36 ist. Der erste Schalter 35 kann ein herkömmlicher elektrisch betätigbarer Schalter oder ein Halbleiterschalter, z. B. ein N-Kanal-MOS-FET-Schalter, sein. Die Diode ist ein passiver Schalter und sperrt in Richtung des ersten Teilnetzes 11.

Der Vorteil, den zweiten Schalter als Diode 36 auszuführen, liegt wiederum darin, dass durch die passiven Schalteigenschaften der Diode ein Entladen des Speichers 3 des zweiten Teilnetzes 12 auf eine Spannung unterhalb der Spannung des ersten Teilnetzes 11 bei geschlossenem ersten Schalter 35 nicht stattfindet. Allerdings ist ein Notbetrieb, bei dem das erste Teilnetz 11 aus dem zweiten Teilnetz 12 versorgt wird, nicht mehr möglich.

Figur 3B illustriert wiederum die Schaltzustände des ersten Schalters 35 und der Diode 36 für verschiede Betriebszustände.

Zum aktiven Trennen der beiden Bordnetze 11, 12 öffnet die Steuereinheit 17 den Schalter 35, die Diode sperrt. Ferner können die Bordnetze 11, 12 bei geschlossenem ersten Schalter 35 passiv getrennt sein. Die ist der Fall, wenn die Spannung im Hochvoltnetz 12 größer als die Spannung im Niedervoltnetz 11 (die ist der Normalfall) ist. Falls jedoch die Spannung im Teilnetz 12 unter die Spannung des Teilnetzes 11 fällt, ist die Diode 36 leitend.

Bei geladenem Speicher 2 und entladenem Speicher 3 kann Letzterer wiederum durch den Speicher 2 geladen oder durch externes Laden über die externe Ladeschnittstelle 18 geladen werden. Hierzu werden die beiden Teilnetze 11, 12 über die Hilfsladeschaltung 23 durch Schließen des Schalters 35 gekoppelt. Allerdings ist die Diode nur leitend, bis die Spannung im Teilnetz 12 die Spannung des Teilnetzes 11 erreicht.

Im Normalbetrieb des Bordnetzes 30 erfolgt die Kopplung der Teilnetze 11, 12 über den Spannungswandler. Der Schalter 35 ist daher offen, die Diode sperrend. Vorstehend wurde bereits festgestellt, dass ein Notbetrieb mit diesem Ausführungsbeispiel nicht möglich ist.

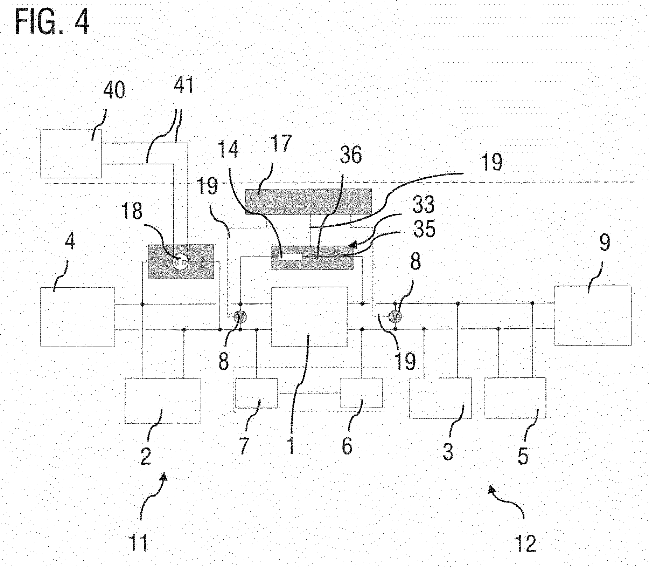

Figur 4 zeigt eine Abwandlung des Ausführungsbeispiels der Figur 3A, wobei die Reihenfolge des ersten Schalters 35 und der Diode 36 vertauscht wurde. Ferner ist in Figur 4 eine externe Ladeeinrichtung 40 an die externe Ladeschnittstelle 18 angeschlossen, beispielsweise ein Fremdfahrzeug über ein Fremdstartkabel 41.

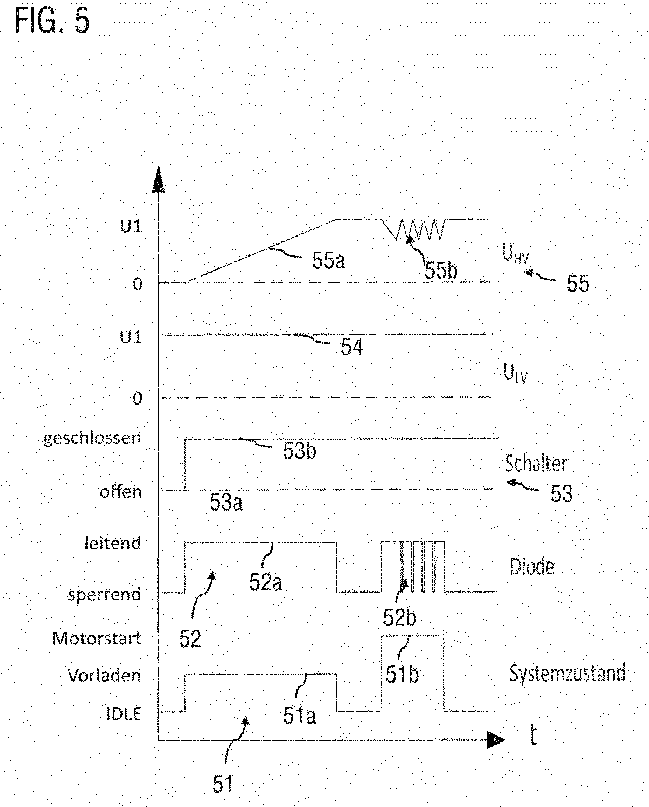

Figur 5 zeigt ein Sequenzdiagramm zur Illustration eines Betriebs des Bordnetzes aus Figur 4 mit der externen Startunterstützung 40.

Die Steuereinheit deaktiviert den Spannungswandler 1, wenn sie erfasst, dass eine externe Ladeeinrichtung 40 an der Ladeschnittstelle 18 angeschlossen wurde, und schließt daraufhin den Schalter 35 der Hilfsladeschaltung 33. Die ist durch die Schaltzustandskurve 53 illustriert, die anzeigt, dass der Schalter 35 von einem offenen Zustand 53a in einen geschlossenen Zustand 53b geschaltet wird. Somit liegt in beiden Teilnetzen 11, 12 das gleiche Potential (U1) 54 an.

Dadurch wird der Energiespeicher 3 im Teilnetz 12 geladen, so dass dessen Spannung 55 ansteigt, was durch den Kurvenabschnitt 55a dargestellt ist. Dieser Systemzustand ist in dem unteren Sequenzdiagramm 51 als Vorladezustand 51a gekennzeichnet. Der Diodenzustand ist durch das Sequenzdiagramm 52 angezeigt. Während der Vorladephase 51a ist die Diode leitend, siehe Kurvenabschnitt 52a.

Erreicht die Spannung im Teilnetz 12 die Spannung U1, schaltet die Diode automatisch in den Sperrzustand. Nach abgeschlossener Vorladung kann ein Motorstart 51b durch einen elektrischen Starter, z. B. durch den Startergenerator 5, im Teilnetz 12 erfolgen, der von dem nun geladenen Energiespeicher 3 des zweiten Teilnetzes versorgt wird. Bedingt durch den Startvorgang ergeben sich Bordnetzwelligkeiten 55b, so dass die Diode 36 durch das Absinken der Bordnetzspannung 55b kurzfristig leitend wird 52b, bis die Spannung im Teilnetz 12 wieder das Niveau (U1) erreicht.

### Bezugszeichenliste

- 1: Spannungswandler (DC/DC-Wandler)
- 2, 3: Energiespeicher
- 4: Lastwiderstand, Verbraucher
- 5: Startergenerator
- 6, 7: Massenpunkte der Teilnetze
- 8: Spannungsmessstelle
- 9: Lastwiderstand, Verbraucher
- 10: Bordnetz
- 11: Niederspannungsteilnetz
- 12: Hochspannungsteilnetz
- 13: Hilfsladeeinrichtung
- 14: Widerstand
- 15, 16: Schalter
- 17: Steuereinrichtung
- 18: Externe Ladeschnittstelle
- 19: Signalleitungen
- 20: Bordnetz
- 23: Hilfsladeeinrichtung
- 25, 26: N-Kanal-MOS-FET
- 30: Bordnetz
- 33: Hilfsladeeinrichtung
- 35: Schalter
- 36: Diode
- 40: Externe Energiequelle
- 41: Fremdstartkabel
- 51: Verlauf Systemzustand
- 51a: Vorladephase
- 51b: Motorstartphase
- 52: Verlauf Diodenzustand
- 52a: Diodenzustand während Vorladephase
- 52b: Diodenzustand während Motorstart
- 53: Schalterzustand
- 53a: Schalter offen
- 53b: Schalter geschlossen
- 54: Gemeinsames Potential bei Verbinden der beiden Teilnetze
- 55: Spannungsverlauf mit Hochspannungsteilnetz
- 55a: Spannungsverlauf während Vorladephase
- 55b: Spannungsverlauf während Motorstart

## Patentansprüche

1. Bordnetz (30) für ein Kraftfahrzeug, insbesondere für ein Nutzfahrzeug, mit einem ersten Teilnetz (11), in dem eine erste Nennspannung (U1) anliegt, umfassend einen ersten Energiespeicher (2) und einen ersten, durch mehrere Verbraucher gebildeten Lastwiderstand (4);
einem zweiten Teilnetz (12), in dem eine zweite Nennspannung (U2) anliegt, umfassend einen zweiten Energiespeicher (3), wobei die erste Nennspannung (U1) kleiner als die zweite Nennspannung (U2) ist;
wobei das erste und zweite Teilnetz (11, 12) über eine Parallelschaltung aus einem Spannungswandler (1) und einer Hilfsladeeinrichtung (33) miteinander gekoppelt sind, wobei die Hilfsladeeinrichtung (33) ein nicht-regelbares Strombegrenzungselement und mindestens einen hierzu in Reihe geschalteten ersten Schalter (35) umfasst,
wobei die Hilfsladeeinrichtung (33) mindestens einen zweiten Schalter umfasst, der in Serie zum ersten Schalter (35) und dem Strombegrenzungselement angeordnet ist, wobei der zweite Schalter eine Diode (36) ist, die in Richtung des ersten Teilnetzes (11) sperrt,
**dadurch gekennzeichnet,**
**dass** das zweite Teilnetz einen Startergenerator (5) umfasst, und
**dass** das Bordnetz eine Messeinrichtung (8,9) zur Erfassung der Spannung im ersten Teilnetz (11) und zur Erfassung der Spannung im zweiten Teilnetz (12) umfasst, wobei der mindestens eine erste Schalter (35) der Hilfsladeeinrichtung (33) dazu ausgebildet ist, zu schließen, wenn die Spannung im zweiten Teilnetz (12) unter einen vorgegebenen Schwellwert fällt oder wenn eine Fehlfunktion des Spannungswandlers (1) festgestellt wird.

2. Bordnetz (30) nach Anspruch 1, **dadurch gekennzeichnet, dass** das Strombegrenzungselement ein ohmscher Widerstand (14) ist.

3. Bordnetz (30) nach Anspruch 1 oder 2, **dadurch gekennzeichnet, dass**
a) das Strombegrenzungselement in Bezug auf das erste Teilnetz (11) vor dem mindestens einen ersten Schalter (35) und dem mindestens einen zweiten Schalter angeordnet ist; und/oder
b) dass das erste Teilnetz (11) eine externe Ladeschnittstelle (18) aufweist.

4. Bordnetz (30) nach einem der vorhergehenden Ansprüche, **dadurch gekennzeichnet,**
a) **dass** der Startergenerator (5) eine elektrischen Maschine ist, die zum Generatorbetrieb bzw. Rekuperationsbetrieb und zum Starten eines Verbrennungsmotors des Kraftfahrzeugs ausgebildet ist; und/oder
b) **dass** der Startergenerator (5) ein Kurbelwellenstartergenerator ist; und/oder
c) **dass** der zweite Energiespeicher (3), vorzugsweise ein Superkondensatorspeicher oder Li-Ionen-Akkumulator, ausgebildet ist, von dem Startergenerator (5) erzeugte elektrische Ladung zu speichern; und/oder
d) **dass** der Spannungswandler (1) das erste Teilnetz (11) mit dem zweiten Teilnetz (12) bidirektional verbindet und ausgebildet ist, in Abhängigkeit eines Ladezustands des ersten Energiespeichers (2) und/oder eines Ladezustands des zweiten Energiespeichers (3) Energie über den Spannungswandler (1) zwischen dem ersten (11) und zweiten (12) Teilnetz zu übertragen.

5. Fahrzeug, insbesondere Nutzfahrzeug, mit einem Bordnetz (30) nach einem der vorstehenden Ansprüche.

## Claims

1. An on-board power supply system (30) for a motor vehicle, in particular for a commercial vehicle, having a first subsystem (11), in which a first rated voltage (U1) is present, comprising a first energy store (2) and a first load resistor (4) formed by a plurality of consumers;
a second subsystem (12), in which a second rated voltage (U2) is present, comprising a second energy store (3), wherein the first rated voltage (U1) is lower than the second rated voltage (U2);
wherein the first and second subsystem (11, 12) are coupled to one another via a parallel circuit composed of a voltage converter (1) and an auxiliary charging device (33), wherein the auxiliary charging device (33) comprises a non-controllable current limiting element and at least one first switch (35) connected in series therewith,
wherein the auxiliary charging device (33) comprises at least one second switch, which is arranged in series with the first switch (35) and the current limiting element, wherein the second switch is a diode (36), which blocks in the direction of the first subsystem (11),
**characterized**
**in that** the second subsystem comprises a starter generator (5), and
**in that** the on-board power supply system comprises a measuring device (8, 9) for detecting the voltage in the first subsystem (11) and for detecting the voltage in the second subsystem (12), wherein the at least one first switch (35) of the auxiliary charging device (33) is designed to close when the voltage in the second subsystem (12) falls below a prescribed threshold value or when a faulty function of the voltage converter (1) is determined.

2. The on-board power supply system (30) according to Claim 1, **characterized in that** the current limiting element is an ohmic resistor (14).

3. The on-board power supply system (30) according to Claim 1 or 2, **characterized in that**
a) the current limiting element is arranged with respect to the first subsystem (11) upstream of the at least one first switch (35) and the at least one second switch; and/or
b) **in that** the first subsystem (11) has an external charging interface (18).

4. The on-board power supply system (30) according to one of the preceding claims, **characterized**
a) **in that** the starter generator (5) is an electric machine, which is designed for generator operation or recuperation operation and to start an internal combustion engine of the motor vehicle; and/or
b) **in that** the starter generator (5) is a crankshaft starter generator; and/or
c) **in that** the second energy store (3), preferably a supercapacitor or Li ion rechargeable battery, is designed to store electrical charge generated by the starter generator (5); and/or
d) **in that** the voltage converter (1) connects the first subsystem (11) to the second subsystem (12) in a bidirectional manner and is designed to transmit energy via the voltage converter (1) between the first (11) and second (12) subsystem depending on a state of charge of the first energy store (2) and/or a state of charge of the second energy store (3).

5. A vehicle, in particular commercial vehicle, having an on-board power supply system (30) according to one of the preceding claims.

## Revendications

1. Réseau de bord (30) pour un véhicule automobile, en particulier pour un véhicule utilitaire, doté
d'un premier sous-réseau (11), aux bornes duquel est appliquée une première tension nominale (U1), comprenant un premier accumulateur d'énergie (2) et une première résistance de charge (4) formée par plusieurs consommateurs ;
d'un deuxième sous-réseau (12), aux bornes duquel est appliquée une deuxième tension nominale (U2), comprenant un deuxième accumulateur d'énergie (3), dans lequel la première tension nominale (U1) est inférieure à la deuxième tension nominale (U2) ;
dans lequel le premier et le deuxième sous-réseau (11, 12) sont couplés l'un à l'autre par un circuit parallèle formé d'un transformateur de tension (1) et d'un dispositif auxiliaire de charge (33), dans lequel le dispositif auxiliaire de charge (33) comprend un élément limiteur de courant non-réglable et au moins un premier commutateur (35) branché en série avec celui-ci,
dans lequel le dispositif auxiliaire de charge (33) comprend au moins un deuxième commutateur, lequel est agencé en série avec le premier commutateur (35) et avec l'élément limiteur de courant,
dans lequel le deuxième commutateur est une diode (36), laquelle bloque dans la direction du premier sous-réseau (11),
**caractérisé en ce que**
le deuxième sous-réseau comprend un alterno-démarreur (5), et **en ce que**
le réseau de bord comprend un dispositif de mesure (8, 9) pour saisir la tension dans le premier sous-réseau (11) et pour saisir la tension dans le deuxième sous-réseau (12), dans lequel l'au moins un premier commutateur (35) du dispositif auxiliaire de charge (33) est réalisé de façon à se fermer lorsque la tension dans le deuxième sous-réseau (12) tombe sous une valeur seuil prédéfinie ou lorsqu'un dysfonctionnement du transformateur de tension (1) est observé.

2. Réseau de bord (30) selon la revendication 1, **caractérisé en ce que** l'élément limiteur de courant est une résistance ohmique (14).

3. Réseau de bord (30) selon la revendication 1 ou 2, **caractérisé en ce que**
a) l'élément limiteur de courant est agencé, par rapport au premier sous-réseau (11), avant l'au moins un premier commutateur (35) et l'au moins un deuxième commutateur ; et/ou **en ce que**
b) le premier sous-réseau (11) comporte une interface de charge (18).

4. Réseau de bord (30) selon l'une des revendications précédentes, **caractérisé en ce que**
a) l'alterno-démarreur (5) est une machine électrique, laquelle est réalisée pour fonctionner comme générateur, à savoir pour la récupération, et pour le démarrage d'un moteur à combustion du véhicule automobile ; et/ou **en ce que**
b) l'alterno-démarreur (5) est un alterno-démarreur de vilebrequin ; et/ou **en ce que**
c) le deuxième accumulateur d'énergie (3), de préférence un accumulateur à supercondensateur ou un accumulateur Li-ion, est réalisé pour accumuler la charge électrique produite par l'alterno-démarreur (5) ; et/ou en ce que
d) le transformateur de tension (1) raccorde de manière bidirectionnelle le premier sous-réseau (11) au deuxième sous-réseau (12) et est réalisé pour transmettre de l'énergie entre le premier (11) et le deuxième sous-réseau (12) par le biais du transformateur de tension (1) en fonction d'un état de charge du premier accumulateur d'énergie (2) et/ou d'un état de charge du deuxième accumulateur d'énergie (3).

5. Véhicule, en particulier véhicule utilitaire, doté d'un réseau de bord (30) selon l'une des revendications précédentes.
